**Europäisches Patentamt**

**European Patent Office**

**Office européen des brevets**

(19)

(11) Veröffentlichungsnummer: **0 119 452**
**B1**

# EUROPÄISCHE PATENTSCHRIFT

(12)

(45) Veröffentlichungstag der Patentschrift:
02.09.87

(21) Anmeldenummer: **84101421.0**

(22) Anmeldetag: **11.02.84**

(51) Int. Cl.⁴: **G 05 D 23/20,** H 05 B 1/02

(54) **Schaltungsanordnung zur Regelung der Heizleistung eines Heizelementes.**

(30) Priorität: **17.02.83 DE 3305376**

(43) Veröffentlichungstag der Anmeldung:
**26.09.84 Patentblatt 84/39**

(45) Bekanntmachung des Hinweises auf die Patenterteilung:
**02.09.87 Patentblatt 87/36**

(84) Benannte Vertragsstaaten:
**AT BE CH FR GB IT LI LU NL SE**

(56) Entgegenhaltungen:
**US-A-3 365 654
US-A-3 584 208
US-A-4 361 274**

**ELECTRONIQUE & APPLICATIONS
INDUSTRIELLES, Nr. 246, Januar 1978, Seite 51,
Paris, FR; "Economies d'énergie : régulez votre
radiateur 2 kW"
W. OPPELT: "Kleines Handbuch technischer
Regelvorgänge", Fünfte, neubearbeitete und
erweiterte Auflage, 1972, Seite 321, Verlag Chemie,
Weinheim, DE;
INTERNATIONAL JOURNAL ELECTRONICS, Band
37, Nr. 3, März 1974, Seiten 433-434, London, GB;
D.H. HORROCKS: "A non-inverting differentiator
using a single operational amplifier"
Prospekt der Firma VALVO, "TDA 1023-
Monolithische integrierte Schaltung", 7.82, Seiten**

(73) Patentinhaber: **Kurt Wolf & Co. KG,
Langwiesenweg 67/71, D-7547 Wildbad (DE)**

(72) Erfinder: **Wolfram, Andre, Dipl.- Ing., Eichenweg 7,
D-7307 Aichwald 4 (DE)**

(74) Vertreter: **Vogel, Georg, Hermann- Essig- Strasse
35, D-7141 Schwieberdingen (DE)**

(56) Entgegenhaltungen: (Fortsetzung)
**203-213**

EP 0 119 452 B1

## Beschreibung

Die Erfindung betrifft eine Schaltungsanordnung zur Regelung der Heizleistung eines Heizelementes, bei der ein Nulldurchgangsschalter bei jedem Netzspannungs-Nulldurchgang ein Signal zur Auslösung eines Zündimpulses für einen das Heizelement ein- und ausschaltenden Halbleiterschalter abgibt und bei der eine der Isttemperatur proportionale Sensorspannung dem einen einen Eingang eines in dem Nulldurchgangsschalter angeordneten Komparators zugeführt wird, der die zugeführte Sensorspannung mit einer an seinem anderen Eingang anliegenden vorgegebenen Soll-Spannung vergleicht und daraus die Dauer der Zündimpulse festlegt.

Eine Schaltungsanordnung dieser Art ist durch die US-A-3 365 654 bekannt und macht sich die thermische Trägheit des Heizsystems - sonst eine nachteilige Eigenschaft des Heizelementes - zunutze. Das Aufheizen und Abkühlen des Heizsystems geht nicht in Sekundenschnelle vonstatten, sondern dauert -zig Sekunden bis Minuten. Bei dieser Regelung der Heizleistung führt man die elektrische Leistung in Form von Impulsserien der Netzspannung dem Heizelement zu, wobei die Anzahl der eingeschalteten und der ausgeschalteten Netzschwingungen variiert (Periodengruppensteuerung). Der Mittelwert der Heizleistung kann daher sehr feinfühlig eingestellt werden. Als Schaltelement wird ein Halbleiter verwendet, der stets beim Nulldurchgang der Netzspannung geschaltet wird. Daher hat diese bekannte Schaltungsanordnung auch eine hohe Lebensdauer. Die Einschaltdauer wird durch einen Komparator festgelegt, der eine der Isttemperatur proportionale Spannung mit einer vorgegebenen Soll-Spannung vergleicht.

Diese Periodengruppensteuerung wird einfach analog realisiert, in dem die Sensorspannung einem sogenannten, heute als Nulldurchgangsschalter bekannten, integrierten Schaltkreis zugeführt und dort einer sägezahnartigen Spannung überlagert wird, um abhängig von der Sensorspannung die Einschaltdauer des Nulldurchgangsschalters zu regeln.

Eine monolithische integrierte Schaltung dieser Art stellt das Bauteil TDA 1023 der Firma VALVO dar, wie es in dem Firmenprospekt dieser Firma, Ausgabe 7.82, Seiten 203 bis 214, gezeigt ist und wie es in einer Regelschaltung eines Heizelementes eingesetzt ist (Electronique & Applications Industrielles, Nr. 246, 15. Januar 1978, Seite 57, Paris, FR: "Economies d'énergie: réguler votre radiateur 2KW").

Es ist auch bekannt, durch einfache Mitkopplungs- und Gegenkopplungsschaltungen mit einem einzigen Verstärkerelement einer Eingangsspannung eine Zusatzspannung zu überlagern, die vom Anstieg oder Abfall der Eingangsspannung abhängig ist (W. Oppelt: "Kleines Handbuch technischer Regelvorgänge", fünfte, neu bearbeitete und erweiterte Auflage, 1972, Seite 321, Verlag Chemie, Weinheim, DE und International Journal Electronics, Band 37, No. 3, März 1974, Seiten 433-434, London, GB; D.H. Horrocks: "A non-inverting differentiator using a single operational amplifier").

Dabei ist es außerdem bekannt, dem als Operationsverstärker geschalteten Verstärkerelement die Eingangsspannung über einen Tiefpaß zuzuführen (US-A-4 361 274).

Nun gibt es Anwendungsfälle, bei denen das Heizelement z. B. in einer Kochplatte eingebaut ist und einen Kochtopf heizt, bei dem die Temperatur des Inhalts überwacht wird. Ein derartiges Heizsystem hat sowohl in der Aufheizphase, als auch in der Abkühlphase sehr große thermische Trägheit. Dies hat zur Folge, daß selbst beim Einsatz einer Schaltungsanordnung der eingangs erwähnten Art eine Überhitzung des Kochgutes auftreten kann. Dies rührt einfach daher, daß bei der Abschaltung des Heizelementes bei der vorgegebenen Regeltemperatur das gesamte Heizsystem aufgrund seiner großen Trägheit nachheizt und noch eine höhere Temperatur annehmen kann. Diese Gefahr der Überhitzung ist zudem von dem Heizsystem, z. B. der Heizleistung des Heizelementes, der Größe des Kochtopfes und der Inhaltsmenge im Kochtopf, abhängig. Diese Überhitzung am Ende der Anheizphase ist auch aus Energiespargründen unerwünscht.

Es ist Aufgabe der Erfindung, eine Schaltungsanordnung der eingangs erwähnten Art so zu verbessern, daß insbesondere in der Aufheizphase ein Überschreiten der vorgegebenen Regeltemperatur vermieden und die Regelgenauigkeit in den Aufheiz- und Abkühlphasen erhöht werden kann.

Diese Aufgabe wird nach der Erfindung dadurch gelöst, daß aus der Sensorspannung eine dem Grad des Anstieges und/oder des Abfalls der Sensorspannung entsprechende Zusatzsteuerspannung abgeleitet ist und daß in den Aufheizphasen die Zusatzsteuerspannung von bzw. zu der Sensorspannung subtrahiert bzw. addiert und in den Abkühlphasen zu bzw. von der Sensorspannung addiert bzw. subtrahiert wird, wenn die Sensorspannung dem Verlauf der überwachten Temperatur umgekehrt proportional bzw. direkt proportional ist.

Mit der Einbeziehung der Zusatzsteuerspannung in den Steuerkreis der Sensorspannung wird erreicht, daß sich bei den unterschiedlichsten Temperatur-Zeit-Charakteristiken von Heizsystemen eine automatische Anpassung der Abschalt- und Einschaltzeitpunkte für das Heizelement ergibt. Bei einem schnellen Temperatur-Anstieg in der Aufheizphase ergibt sich eine große Zusatzsteuerspannung, die eine große Verlagerung des Abschaltzeitpunktes bewirkt, so daß schon lange vor dem Erreichen der Regeltemperatur das Heizelement abgeschaltet wird. Ist der Temperaturanstieg in der Aufheizphase langsam, dann ergibt sich eine wesentlich kleinere Zusatzsteuerspannung. Die Verlagerung des Abschaltzeitzeitpunktes nach tieferen Temperaturen hin ist daher nicht so groß. Mit der nach der Erfindung ausgerüsteten Schaltungsanordnung läßt sich die Verlagerung so einrichten, daß unabhängig von der Temperatur-Zeit-Charakteristik des Heizsystems ein Überschreiten der Regeltemperatur (Arbeitstemperatur) in der Aufheizphase praktisch vermieden ist. Ist das Heizelement abgeschaltet und kühlt sich das Heizsystem ab, dann ändert die Zusatzsteuerspannung die Polarität. Die Steuerspannung wird daher in umgekehrtem Sinne beeinflußt, d.h. das Heizelement wird schon bei höherer Temperatur wieder eingeschaltet. Die Schalt-Hysterese des Heizsystems kann daher sehr klein gehalten werden, was sich in einer höheren Regelungsgenauigkeit auswirkt.

Die Abschalttemperatur in der Aufheizphase paßt sich daher automatisch an das Heizsystem und seine Temperatur-Zeit-Charakteristik an. Bei einem vollen Kochtopf wird z. B. in der Aufheizphase näher an die Arbeitstemperatur herangefahren als bei einem nur teilweise gefüllten Kochtopf, ohne daß dafür Einstellungen vorgenommen werden müssen. Die Schaltungsanordnung macht also unabhängig von der Art des Heizsystems und berücksichtigt automatisch die auftretende Temperatur-Zeit-Charakteristik und wählt für eine vorgegebene Regeltemperatur (Arbeitstemperatur) die dafür günstigsten Abschalt- und Einschaltzeitpunkte für das Heizelement.

Die Addition bzw. Subtraktion der Zusatzsteuerspannung hängt dabei davon ab, ob die der Isttemperatur entsprechende Sensorspannung der Temperatur umgekehrt proportional bzw. direkt proportional ist. Mit der Addition bzw. Subtraktion der Zusatzsteuerspannung zu bzw. von der Sensorspannung ergibt sich eine vom Anstieg bzw. Abfall der Temperatur abhängige Verlagerung des Einschaltzeitpunktes bzw. Ausschaltzeitpunktes für das Heizelement, so daß eine wesentlich exaktere Regelgenauigkeit erreicht wird und die im Heizsystem vorliegenden Gegebenheiten automatisch berücksichtigt werden.

Dabei ist in dem einen Fall, bei dem die Sensorspannung der Isttemperatur umgekehrt proportional ist, vorgesehen, daß dem anderen Eingang des im Nulldurchgangsschalter angeordneten·Komparators als Soll-Spannung eine Schwellwertspannung zugeführt ist, daß beim Überschreiten dieser Schwellwertspannung durch die Sensorspannung mit der überlagerten Zusatzsteuerspannung der Nulldurchgangsschalter für die Ansteuerung des Halbleiterschalters freigegeben ist und daß beim Unterschreiten der Schwellwertspannung durch die Sensorspannung mit der überlagerten Zusatzsteuerspannung der Nulldurchgangsschalter für die Ansteuerung des Halbleiterschalters gesperrt ist.

Ist die Sensorspannung der Ist-Temperatur direkt proportional, dann ist die Auslegung so, daß dem anderen Eingang des im Nulldurchgangsschalter angeordneten Komparators als Soll-Spannung eine Schwellwertspannung zugeführt ist, daß beim Überschreiten der Schwellwertspannung durch die Sensorspannung mit der überlagerten Zusatzsteuerung der Nulldurchgangsschalter für die Ansteuerung des Halbleiterschalters gesperrt ist und daß beim Unterschreiten der Schwellwertspannung durch die Sensorspannung mit der überlagerten Zusatzsteuerspannung der Nulldurchgangsschalter für die Ansteuerung des Halbleiterschalters freigegeben ist.

Eine einfache Schaltungsanordnung zu dieser gewünschten Überlagerung von Sensorspannung und der daraus abgeleiteten Zusatzsteuerspannung ist dadurch gekennzeichnet, daß die Sensorspannung vorzugsweise über einen Widerstand an dem nicht invertierenden Eingang eines Operationsverstärkers anliegt und die Reihenschaltung aus einem Widerstand und einem Kondensator speist, daß der Verbindungspunkt zwischen dem Widerstand und dem Kondensator der Reihenschaltung über einen weiteren Widerstand mit dem invertierenden Eingang des Operationsverstärkers verbunden ist, daß der invertierende Eingang des Operationsverstärkers über einen Gegenkopplungswiderstand mit dem Ausgang des Operationsverstärkers verbunden ist, wobei das Verhältnis dieses Gegenkopplungswiderstandes zu dem dem invertierenden Eingang des Operationsverstärkers vorgeschalteten Widerstand den Verstärkungsgrad für die aus der Sensorspannung abgeleitete Zusatzsteuerspannung zum Ausgang des Operationsverstärkers bestimmt, und daß der Ausgang des Operationsverkstärkers mit dem einen Eingang des Nulldurchgangsschalter angeordneten Komparators verbunden ist.

Damit die Schaltungsanordnung unempfindlich gegen Störimpulse ist, sieht eine weitere Ausgestaltung vor, daß die Sensorspannung über einen aus Längswiderstand und Querkondensator gebildeten Tiefpaß dem Operationsverstärker zugeführt ist. Hochfrequente Anteile der Eingangsspannung werden durch den Querkondensator des Tiefpasses kurzgeschlossen.

Für Heizsysteme aus Kochplatte und Kochtopf mit Inhalt hat sich eine Ausgestaltung für vorteilhaft erwiesen, die dadurch gekennzeichnet ist, daß die Zeitkonstante der aus Widerstand und Kondensator gebildeten Reihenschaltung auf etwa 10 bis 20 Sekunden ausgelegt ist.

Die Erfindung wird anhand eines in den Zeichnungen dargestellten Ausführungsbeispiels näher erläutert. Es zeigt:

Fig. 1 Temperatur-Zeit-Charakteristik eines Heizsystems mit unterschiedlichen Aufheizphasen,

Fig. 2 die zu den Temperatur-Zeit-Charakteristiken nach Fig. 1 gehörigen Sensorspannungen und Zusatzsteuerspannungen und

Fig. 3 einen Stromlaufplan mit einem Operationsverstärker zur Überlagerung der Sensorspannung und einer daraus abgeleiteten Zusatzsteuerspannung, wobei der Operationverstärker einen Nulldurchgangsschalter zur Ein- und Ausschaltung eines dem Heizelement vorgeschalteten Halbleiterschalters steuert.

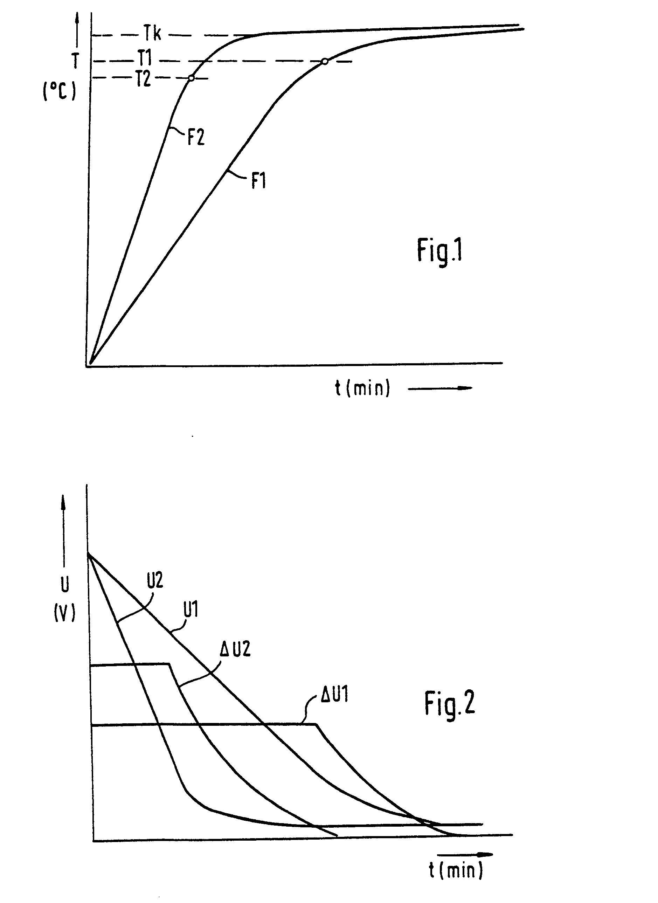

In dem Diagramm nach Fig. 1 ist der Temperatur-Zeitverlauf einer Aufheizphase idealisiert dargestellt, wenn die Periodengruppensteuerung eines Nulldurchgangsschalters zusätzlich mit einer der Sensorspannung überlagerten Zusatzsteuerspannung gesteuert wird. Der Verlauf F1 zeigt, daß der Temperaturanstieg langsamer als beim Verlauf F2 vor sich geht. Dies hängt davon ab, daß das gesamte Heizsystem beim Verlauf F1 mehr Energie erfordert. Auf eine Heizplatte mit vorgegebener maximaler Heizleistung bezogen, kann dies bedeuten, daß beim Verlauf F1 ein größerer Kochtopf aufgesetzt ist oder daß bei gleichem Kochtopf die Inhaltsmenge im Kochtopf größer ist.

Wie in Fig. 1 angedeutet ist, wird das Heizsystem auf die mit Tk bezeichnete Regeltemperatur (Arbeitstemperatur) eingeregelt. Es ist nun nach der Erfindung vorgesehen, daß in der Aufheizphase die erste Abschaltung des Heizelementes nach tieferen Temperaturen T1 bzw. T2 hin verlagert wird. Dabei ist die Verlagerung um so größer, je steiler der Anstieg ist. Damit wird erreicht, daß aufgrund der thermischen Trägheit des Heizsystems ein Überschreiten der Regeltemperatur (Arbeitstemperatur) praktisch vermieden ist.

Wie Fig. 2 zeigt, wird aus dem Verlauf der Temperatur-Zeit-Charakteristik eine Sensorspannung U1 bzw. U2 abgeleitet, die im gewählten Ausführungsbeispiel der Temperatur umgekehrt proportional ist, wie die Funktionen U1 = f(t) und U2 = f(t) zeigen. Zusätzlich werden aus den Sensorspannungen U1 und U2 Zusatzsteuerspannungen $\Delta$U1 und $\Delta$U2 abgeleitet, deren Beträge der Steigung der Temperatur-Zeit-Charakteristiken proportional sind. Der steilere Verlauf F2 führt daher auch zu einer größeren Zusatzsteuerspannung $\Delta$U2. Die Zusatztsteuerspannungen $\Delta$U1 und $\Delta$U2 bleiben bei stetigem Anstieg konstant und nehmen mit fallender Steigung entsprechend ab, wie in Fig. 2 gezeigt ist.

Bei der Erfindung kommt es nun darauf an, die Verlagerung des Abschaltzeitpunktes für das Heizelement automatisch so vorzunehmen, daß unabhängig vom Verlauf F1 oder F2 der Temperatur-Zeit-Charakteristik stets ein Überschreiten der Regeltemperatur (Arbeitstemperatur) vermieden ist. Zu diesem Zweck wird nach der Erfindung der Sensorspannung U1 bzw. U2 die entsprechende Zusatzsteuerspannung $\Delta$U1 bzw. $\Delta$U2 überlagert.

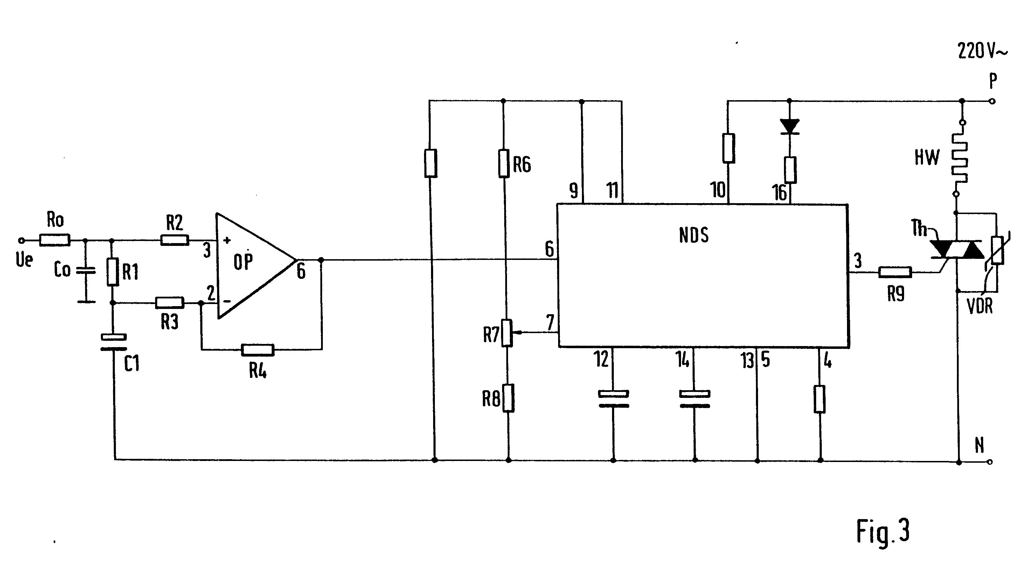

Um diese Überlagerung zu erreichen, wird die Sensorspannung U1 bzw. U2 als Eingangsspannung Ue an eine Schaltungsanordnung nach Fig. 3 angelegt. Der Längswiderstand Ro und der Querkondensator Co bilden einen Tiefpaß, der hochfrequente Störimpulse der Eingangsspannung Ue kurzschließt und von dem nachgeschalteten Operationsverstärker OP fernhält. Die Sensorspannung U1 bzw. U2 steht über den Widerstand R2 an dem nichtinvertierenden Eingang 3 des Operationsverstärkers OP an und speist die Reihenschaltung aus dem Widerstand R1 und dem Kondensator C1.

Die Sensorspannung U1 bzw. U2 steht in gleicher Größe und Polarität auch am Ausgang 6 des Operationsverstärkers OP an, wenn diese konstant ist. Da dabei auch der Kondensator C1 in der Reihenschaltung aus dem Widerstand R1 und dem Kondensator C1 auf die Sensorspannung U1 bzw. U2 aufgeladen ist, fließt über den Widerstand R1 kein Strom. An dem nichtinvertierenden Eingang 3 und dem invertierenden Eingang 2 des Operationsverstärkers OP steht daher über die Widerstände R2 und R3 die gleiche Sensorspannung U1 bzw. U2 an. Damit befinden sich alle Eingänge 2 und 3 und der Ausgang G des Operationsverstärkers OP auf demselben Potential, d.h. der Sensorspannung U1 bzw. U2.

Wenn sich die Sensorspannung U1 bzw. U2 ändert, dann fließt ein Strom durch den Widerstand R1. Am Widerstand R1 entsteht dabei ein Spannungsabfall, der von der Richtung der Änderung der Sensorspannung U1 bzw. U2 abhängt, d.h. der Kondensator C1 wird zusätzlich geladen oder teilweise entladen. Der Spannungsabfall am Widerstand R1 wird von dem Operationsverstärker OP verstärkt und zu der am Ausgang 6 stehenden Spannung addiert bzw. von dieser subtrahiert. Der Verstärkungsfaktor hängt von dem Verhältnis des Gegenkopplungswiderstandes R4 und dem Widerstand R3 ab. Der Gegenkopplungswiderstand R4 verbindet den Ausgang 6 des Operationsverstärkers OP mit dem invertierenden Eingang 2 des Operationsverstärkers OP.

Am Ausgang 6 des Operationsverstärkers OP steht eine Steuerspannung an, die sich aus der Sensorspannung U1 bzw. U2 und der überlagerten, verstärkten Zusatzsteuerspannung $\Delta$U1 bzw. $\Delta$U2 zusammensetzt. Diese Steuerspannung wird dem Steuereingang 6 des Nulldurchgangsschalters NDS zugeführt. Der Nulldurchgangsschalter NDS kann ein unter der Typenbezeichnung TDA 1023 handelsüblicher, integrierter Schaltkreis sein. An dem Spannungsteiler aus den Widerständen R6, R7 und R8 wird eine Schwellwertspannung für den Steuereingang 7 des Nulldurchgangsschalters NDS abgegriffen. Solange die Steuerspannung am Steuereingang 6 die Schwellwertspannung am Steuereingang 7 überschreitet, wird der Nulldurchgangsschalter NDS den Halbleiterschalter Th, z. B. einen Thyristor, leitend steuern und zwar unter Ausnützung der sogenannten Periodengruppensteuerung mit der am Anschluß 12 austretenden Sägezahnspannung. Unterschreitet die Steuerspannung am Steuereingang G die Schwellwertspannung am-Steuereingang 8, dann wird der Nulldurchgangsschalter NDS für die Ansteuerung des Halbleiterschalters Th gesperrt. Dabei bleibt im Regelbereich die impulsförmige Ansteuerung des Halbleiterschalters Th erhalten.

Der Halbleiterschalter Th wird von dem Ausgang 3 des Nulldurchgangsschalters NDS über den Widerstand R9 in seinem Steuerkreis angesteuert und schaltet das Heizelement HW an die Wechselspannung 220 V, die an den Klemmen P und N angelegt ist. Dem Halbleiterschalter Th ist ein spannungsabhängiger Widerstand VDR parallelgeschaltet. Als Halbleiterschalter Th kann ein Thyristor verwendet werden.

Selbstverständlich läßt sich die Schaltungsanordnung auch mit einer Sensorspannung U1 bzw. U2 realisieren, die der Temperatur T direkt proportional ist. Der Nulldurchgangsschalter NDS wird dann beim Überschreiten der Schwellwertspannung durch die Sensorspannung U1 bzw. U2 mit der überlagerten und addierten Zusatzsteuerspannung ∆U1 bzw. ∆U2 für die Ansteuerung des Halbleiterschalters Th gesperrt und beim Unterschreiten der Schwellwertspannung durch die Sensorspannung U1 bzw. U2 mit der überlagerten und subtrahierten Zusatzsteuerspannung ∆U1 bzw. ∆U2 für die Ansteuerung des Halbleiterschalters Th freigegeben. Dabei kann es ausreichend sein, die Steuereingänge 6 und 7 des Nulldurchgangsschalters NDS zu vertauschen.

**Patentansprüche**

1. Schaltungsanordnung zur Regelung der Heizleistung eines Heizelementes (HW), bei der ein Nulldurchgangsschalter (NDS) bei jedem Netzspannungs-Nulldurchgang ein Signal zur Auslösung eines Zündimpulses für einen das Heizelement (HW) ein und ausschaltenden Halbleiterschalter (Th) abgibt und bei der eine der Isttemperatur (T) proportionale Sensorspannung ($U_1$, U2) dem einen Eingang (6) eines in dem Nulldurchgangsschalter (NDS) angeordneten Komparators zugeführt wird, der die zugeführte Sensorspannung mit einer an seinem anderen Eingang anliegenden vorgegebenen Soll-Spannung vergleicht und daraus die Dauer der Zündimpulse festlegt, dadurch gekennzeichnet,

daß aus der Sensorspannung (U1, U2) eine dem Grad des Anstieges und/oder des Abfalls der Sensorspannung (U1, U2) entsprechende Zusatzsteuerspannung (∆U1, ∆U2) abgeleitet ist und

daß in den Aufheizphasen die Zusatzsteuerspannung (∆U1, ∆U2) von bzw. zu der Sensorspannung (U1, U2) subtrahiert bzw. addiert und in den Abkühlphasen zu bzw. von der Sensorspannung (U1, U2) addiert bzw. subtrahiert wird, wenn die Sensorspannung (U1, U2) dem Verlauf (F1, F2) der überwachten Temperatur (T) umgekehrt proportional bzw. direkt proportional ist.

2. Schaltungsanordnung nach Anspruch 1, dadurch gekennzeichnet, daß dem anderen Eingang des im Nulldurchgangsschalter (NDS) angeordneten Komparators als Soll-Spannung eine Schwellwertspannung zugeführt ist, daß beim Überschreiten dieser Schwellwertspannung durch die Sensorspannung (U1, U2) mit der überlagerten Zusatzsteuerspannung (∆U1, ∆U2) der Nulldurchgangsschalter (NDS) für die Ansteuerung des Halbleiterschalters (Th) freigegeben ist und daß beim Unterschreiten der Schwellwertspannung durch die Sensorspannung (U1, U2) mit der überlagerten Zusatzsteuerspannung (∆U1, ∆U2) der Nulldurchgangsschalter (NDS) für die Ansteuerung des Halbleiterschalters (Th) gesperrt ist.

3. Schaltungsanordnung nach Anspruch 1, dadurch gekennzeichnet, daß dem anderen Eingang des im Nulldurchgangsschalter (NDS) angeordneten Komparators als Soll-Spannung eine Schwellwertspannung zugeführt ist, daß beim überschreiten der Schwellwertspannung durch die Sensorspannung (U1, U2) mit der überlagerten Zusatzsteuerung (∆U1, ∆U2) der Nulldurchgangsschalter (NDS) für die Ansteuerung des Halbleiterschalters (Th) gesperrt ist und daß beim Unterschreiten der Schwellwertspannung durch die Sensorspannung (U1, U2) mit der überlagerten Zusatzsteuerspannung (∆U1, ∆U2) der Nulldurchgangsschalter (NDS) für die Ansteuerung des Halbleiterschalters (Th) freigegeben ist.

4. Schaltungsanordnung nach einem der Ansprüche 1 bis 3, dadurch gekennzeichnet, daß die Sensorspannung (U1, U2) vorzugsweise über einen Widerstand (R2) an dem nichtinvertierenden Eingang (3) eines Operationsverstärkers (OP) anliegt und die Reihenschaltung aus einem Widerstand (R1) und einem Kondensator (C1) speist, daß der Verbindungspunkt zwischen dem Widerstand (R1) und dem Kondensator (C1) der Reihenschaltung über einen weiteren Widerstand (R3) mit dem invertierenden Eingang (2) des Operationsverstärkers (OP) verbunden ist, daß der invertierende Eingang (2) des Operationsverstärkers (OP) über einen Gegenkopplungswiderstand (R4) mit dem Ausgang (6) des Operationsverstärkers (OP) verbunden ist, wobei das Verhältnis dieses Gegenkopplungswiderstandes (R4) zu dem dem invertierenden Eingang (2) des Operationsverstärkers (OP) vorgeschalteten Widerstand (R3) den Verstärkungsgrad für die aus der Sensorspannung (U1, U2) abgeleitete Zusatzsteuerspannung (ΔU1, ΔU2) zum Ausgang (6) des Operationsverstärkers (OP) bestimmt, und daß der Ausgang (6) des Operationsverstärkers (OP) mit dem einen Eingang (6) des im Nulldurchgangsschalter (NDS) angeordneten Komparators verbunden ist.

5. Schaltungsanordnung nach Anspruch 4, dadurch gekennzeichnet, daß die Sensorspannung (U1, U2) über einen aus Längswiderstand (Ro) und Querkondensator (Co) gebildeten Tiefpaß dem Operationsverstärker (OP) zugeführt ist.

6. Schaltungsanordnung nach einem der Ansprüche 4 bis 5, dadurch gekennzeichnet, daß die Zeitkonstante der aus Widerstand (R1) und Kondensator (C1) gebildeten Reihenschaltung auf etwa 10 bis 20 Sekunden ausgelegt ist.

**Claims**

1. Circuit layout for the regulating of the heating power of a heating element (HW), by which a zero-crossing switch (NDS) at every mains voltage zero-crossing gives a signal for the actuating of an ignition pulse for a semiconductor switch (Th), which switches the heating element (HW) on and off and by which a sensor voltage (U1, U2) which is proportional to the actual temperature (T) is fed to the one input (6) of a comparator which is located in the zero-crossing switch (NDS), which compares the supplied sensor voltage with a predetermined set voltage which is located at its other input and so fixes the duration of the ignition pulses, characterized by the fact, that from the sensor voltage (U1, U2) an additional control voltage (U1, U2) which corresponds to the degree of the rise and/or fall of the sensor voltage (U1, U2) is derived and that in the heating phases the additional control voltage (U1, U2) is subtracted from or added to the sensor voltage (U1, U2) and in the cooling phases is added to or subtracted from the sensor voltage (U1, U2), when the sensor voltage (U1, U2) is inversely proportional or directly proportional to the course (F1, F2) of the temperature monitored (T).

2. Circuit layout according to claim 1, characterized by the fact, that a threshold voltage is fed to the other input of the comparator which is located in the zero-crossing switch (NDS) as set voltage, that when the sensor voltage (U1, U2) with the superimposed additional control voltage (U1, U2) goes above this threshold voltage the zero-crossing switch (NDS) is released for the triggering of the semiconductor switch (Th) and that when the sensor voltage (U1, U2) with the superimposed additional control voltage (U1, U2) falls below the threshold voltage the zero-crossing switch (NDS) is blocked for the triggering of the semiconductor switch (Th).

3. Circuit layout according to claim 1, characterized by the fact, that a threshold voltage is fed to the other input of the comparator which is located in the zero-crossing switch (NDS) as set voltage, that when the sensor voltage (U1, U2) with the superimposed additional control voltage (U1, U2) goes above the threshold voltage the zero-crossing switch (NDS) is blocked for the triggering of the semiconductor switch (Th) and that when the sensor voltage (U1, U2) with the superimposed additional control voltage (U1, U2) falls below the threshold voltage the zero-crossing switch (NDS) is released for the triggering of the semiconductor switch (Th).

4. Circuit layout according to one of the claims 1 to 3, characterized by the fact, that the sensor voltage (U1, U2) is preferably applied via a resistor (R2) at the non-inverting input (3) of an operational amplifier (OP), that the series circuit is supplied from a resistor (R1) and a capacitor (C1), that the connecting point between the resistor (R1) and the capacitor (C1) of the series circuit is joined via a further resistor (R3) with the inverting input (2) of the operational amplifier (OP), that the inverting input (2) of the operational amplifier (OP) is connected via a negative feedback resistor (R1) with the output (6) of the operational amplifier (OP), whereby the relationship of this negative feedback resistor (R1) to the resistor (R3) which is superimposed on the inverting input (2) of the operational amplifier (OP) determines the degree of amplification for the additional control voltage (U1, U2) which is fed from the sensor voltage (U1, U2) to the output (6) of the operational amplifier (OP), and that the output (6) of the operational amplifier (OP) is connected with the one input (6) of the comparator which is located in the zero-crossing switch (NDS).

5. Circuit layout according to claim 4, characterized by the fact, that the sensor voltage (U1, U2) is supplied via a low pass which is formed by a longitudinal resistor (Ro) and shunt capacitor (Co) to the operational amplifier (OP).

6. Circuit layout according to one of the claims 4 to 5, characterized by the fact,

that the time constant of the series circuit which is formed by resistor (R1) and capacitor (C1) is rated at about 10 to 20 seconds.

## Revendications

1. Agencement de circuit de commutation pour la régulation de la puissance de chauffage d'un élément chauffant (HW), dans lequel, pour chaque passage de la tension du réseau ou secteur par une valeur nulle, un circuit commutateur ou régulateur (NDS), fonctionannt lors du passage par le zéro, envoie à un circuit (Th) à semiconducteur, à rôle d'allumage et d'extinction l'élément chauffang (HW), un signal pour déclencher une impulsion d'allumage et dans lequel une tension (U1, U2) de détecteur, proportionnelle à la témperature réelle (T) est acheminée à une entrée (6) d'un comparateur monté dans le circuit (NDS), lequel compare la tension de détecteur qui lui est envoyée avec une tension de consigne prédéterminée appliquée à son autre entrée et établit ainsi la durée des impulsions d'allumage, agencement caractérisé en ce que, à partir de la tension (U1, U2) de détecteur il est dérivé une tension de commande supplémentaire (ΔU1, ΔU2) correspondant au degré d'augmentation et/ou de diminution de la tension de détecteur (U1, U2) et en ce que, dans les phases d'échauffement, la tension de commande supplémentaire (ΔU1, ΔU2) est soustraite de la tension de détecteur (U1, U2) ou est ajoutée à cette tension (U1, U2) et en ce que, dans les phases de refroidissement elle est ajoutée à la tension de détecteur (U1, U2) ou lui est soustraite, quand la tension (U1, U2) de détecteur est inversement proportionnelle ou directement proportionnelle à l'allure de la variation (F1, F2) de la témperature (T) surveillée.

2. Agencement de circuit selon la revendication 1,

caractérisé en ce qu'une tension ondulatoire est acheminée, comme tension de consigne, à l'autre entrée du comparateur monté dans le circuit (NDS); et, quand la tension (U1, U2) de détecteur excède cette tension ondulatoire, la tension de commande supplémentaire (ΔU1, ΔU2) superposée libère le circuit (NDS) pour lui permettre de commander le circuit de commutation (Th) à semi-conducteur, et, quand la tension (U1, U2) du détecteur est inférieure à la tension ondulatoire, la tension de commande supplémentaire (ΔU1, ΔU2) superposée ferme ou bloque le circuit (NDS) pour lui interdire de commander le circuit de commutation (Th) à semi-conducteur.

3. Agencement de circuit selon la revendication 1,

caractérisé en ce qu'une tension ondulatoire est acheminée comme tension de consigne à l'autre entrée du comparteur monté dans le circuit de commutation (NDS); lorsque la tension (U1, U2) de détecteur excède la tension ondulatoire, la commande supplémentaire (ΔU2, ΔU2) superposée verrouille le circuit (NDS) pour lui interdire de commander le circuit commutateur (Th) à semi-conducteur et, quand la tension (U1, U2) de détecteur est inférieure à la tension ondulatoire, la tension de commande supplémentaire (ΔU1, ΔU2) superposée libère le circuit commutateur (NDS) pour lui permettre de commander le circuit (Th) à semi-conducteur.

4. Agencement de circuit de commutation selon l'une des revendications 1 à 3,

caractérisé en ce que la tension (U1, U2) de détecteur est appliquée, avantageusement par l'intermédiaire d'une résistance (R2) à l'entrée non inversante (3) d'un amplificateur (OP) d'opération et alimente le circuit en série formé d'une résistance (R1) et d'un condensateur (C1); en ce que le point de liaison entre la résistance (R1) et le condensateur (C1) du circuit en série est relié, par l'intermédiaire d'une autre résistance (R3) à l'entrée inversante (2) de l'amplificateur (OP); en ce que l'entrée inversante (2) de l'amplificateur (OP) est reliée par l'intermédiaire d'une résistance (R4) à contre-réaction avec la sortie (6) de l'amplificateur (OP), le rapport entre cette résistance (R4) de contre-réaction et la résistance (R3) placée en amont de l'entrée inversante (2) de l'amplificateur (OP) déterminant le degré d'amplification de la tension de commande supplémentaire (ΔU1, ΔU2) dérivée de la tension (U1, U2) du détecteur et acheminée à la sortie (6) de l'amplificateur (OP), et en ce que la sortie (6) de l'amplificateur (OP) est reliée avec une entrée (6) du comparateur monté dans le circuit de commutation (NDS) fonctionnant lors du passage par une valeur nulle.

5. Agencement de circuit selon la revendication 4,

caractérisé en ce que la tension (U1, U2) du détecteur est achimenée par un passe-bas, formé par une résistance (Ro) en série et un condensateur (Co) en dérivation, à l'amplificateur (OP).

6. Agencement de circuit de commutation selon l'une des revendications 4 à 5,

caractérisé en ce que la constante de temps du circuit en série formé par la résistance (R1) et le condensateur (C1) s'étend sur environ 10 à 20 secondes.

Fig.1

Fig.2

Fig.3